# EUROPEAN PATENT APPLICATION

(11) **EP 2 402 160 A1**
(43) Date of publication of application: **04.01.2012**
(21) Application number: 10746087.5
(22) Date of filing: 10.02.2010
(51) Int. Cl.: B32B 37/10, B32B 5/26, D04H 1/54, D06C 23/04

(54) **METHOD FOR PRODUCING ROLL SHEET AND APPARATUS FOR PRODUCING ROLL SHEET**

(30) Priority: 24.02.2009 JP 2009041199
(71) Applicant: Uni-Charm Corporation, Ehime 799-0111 (JP)
(72) Inventor: HAYASHI, Hiroo, Kanonji-shi Kagawa 769-1602 (JP)
(74) Representative: Eke, Philippa Dianne
(86) International application number: PCT/JP2010/051921
(87) International publication number: WO 2010/098206

(57) **Abstract**

A method of manufacturing a roll of sheet includes forming a layered sheet by combining a plurality of overlapped fiber sheets by compression, accumulating the layered sheet, which is moving in its continuation direction, in a motion path of the layered sheet, and winding the layered sheet. The forming of the layered sheet includes performing first compression in which the layered sheet is compressed in such a manner that a plurality of first regions and a plurality of second regions are disposed in an alternating manner in the continuation direction, the second regions having a higher degree of compression than the first regions and lying along an intersecting direction that intersects with the continuation direction, and performing second compression, that is performed after the first compression, in which the layered sheet is compressed in such a manner that, among the first regions and the second regions, at least the first regions are compressed. The the accumulating of the layered sheet, that is performed after the first compression, includes forming a loop of the layered sheet by disposing the layered sheet along the peripheral surface of a rotatable roller. The winding of the layered sheet, that is performed after the second compression, includes winding the layered sheet on a winding mandrel located downstream of the rotatable roller.

## Description

### Technical Field

The present invention relates to a method and apparatus for manufacturing a roll of sheet. The present invention specifically relates to a method and apparatus for manufacturing a roll of sheet including: forming a layered sheet by combining a plurality of overlapped fiber sheets by compression; accumulating the layered sheet, that is moving in its continuation direction, in a motion path of the layered sheet; and winding the layered sheet.

### Background Art

A roll of sheet is, for example, used as a material for manufacturing an absorbent article such as a tampon and is reeled out in use. A manufacturing process of such a roll of sheet includes forming a layered sheet by combining a plurality of overlapped fiber sheets by compression; accumulating the layered sheet, that is moving in its continuation direction, in a motion path of the layered sheet; and winding the layered sheet. The accumulating of the layered sheet includes forming a loop of the layered sheet by disposing the layered sheet along the peripheral surface of a rotatable roller. The winding of the layered sheet includes winding the layered sheet on a winding mandrel located downstream of the rotatable roller.

It is to be noted that in order to wind the layered sheet in a proper manner, the layered sheet needs to be compressed in advance in its thickness direction. By compressing the layered sheet as much as possible in advance in the thickness direction, the layered sheet will have a sufficient tensile strength against a tensile force that acts on the layered sheet during the winding process of the layered sheet (specifically, a tensile force that pulls the layered sheet in its continuation direction). (E.g., see PTL 1.)

### Citation List

### Patent Literature

PTL 1: JP-A-Utility Model 54-62398

### Disclosure of Invention

### Problems to be Solved by the Invention

However, with the compression of the layered sheet, along with an improvement in the tensile strength, the stiffness (rigidity) of the layered sheet will also increase. Such an increase in the stiffness of the layered sheet may cause troubles in the accumulating of the layered sheet and the winding of the layered sheet. For example, in the accumulating of the layered sheet, if the stiffness is high, the layered sheet may bend improperly and may easily meander when disposed along the peripheral surface of a rotatable roller. Further, in the winding of the layered sheet, if the stiffness is high, the layered sheet cannot wind well on a winding mandrel.

The present invention has been made in view of such a problem and its object is to dispose a layered sheet, that is formed by combining a plurality of overlapped fiber sheets by compression, along a peripheral surface of a rotatable roller while suppressing the meandering and also to wind the layered sheet by properly winding it on a winding mandrel.

### Means for Solving the Problems

In order to achieve the object described above, the main aspect of the present invention is: a method of manufacturing a roll of sheet, comprising: forming a layered sheet by combining a plurality of overlapped fiber sheets by compression; accumulating the layered sheet, that is moving in its continuation direction, in a motion path of the layered sheet; and winding the layered sheet, wherein the forming of the layered sheet includes: performing first compression in which the layered sheet is compressed in such a manner that a plurality of first regions and a plurality of second regions are disposed in an alternating manner in the continuation direction, the second regions having a higher degree of compression than the first regions and lying along an intersecting direction that intersects with the continuation direction; and performing second compression, that is performed after the first compression, in which the layered sheet is compressed in such a manner that, among the first regions and the second regions, at least the first regions are compressed, wherein the accumulating of the layered sheet, that is performed after the first compression, includes forming a loop of the layered sheet by disposing the layered sheet along the peripheral surface of a rotatable roller, and wherein the winding of the layered sheet, that is performed after the second compression, includes winding the layered sheet on a winding mandrel located downstream of the rotatable roller.

Other aspects of the present invention shall be elucidated in the specification with reference to accompanying drawings.

### Advantageous Effects of the Invention

According to an aspect of the invention, a layered sheet that is formed by combining a plurality of overlapped fiber sheets by compression may be disposed along a peripheral surface of a rotatable roller while suppressing the meandering and the layered sheet may be wound up by being properly wound on a winding mandrel.

### Brief Description of Drawings

Fig. 1 is a diagram illustrating an appearance and an application of a roll of sheet 1.
Fig. 2 is a flow chart of a manufacturing step of the roll of sheet 1.
Fig. 3 is a diagram illustrating a fiber sheet manufacturing apparatus 10.
Fig. 4 is a schematic diagram illustrating a main manufacturing step.
Fig. 5 is a flow chart illustrating a main manufacturing step.
Fig. 6 is a schematic diagram illustrating a main manufacturing apparatus 20.
Fig. 7A is a front view of compression rollers 23a and 23b.
Fig. 7B is a diagram illustrating a peripheral surface of the upper compression roller 23a.
Fig. 7C is a cross-sectional diagram taken along line A-A in Fig. 7B.
Fig. 8 is a diagram illustrating a pattern formed on a peripheral surface of patterned rollers 24a and 24b.
Fig. 9 is a side view of a second accumulator 25.
Fig. 10 is a diagram illustrating a winding mechanism 26.
Fig. 11 is a diagram illustrating a layered sheet 7 formed in the first embossing step.
Fig. 12 is a cross-sectional view of the layered sheet 7 in which layer separation has occurred.
Fig. 13 is a diagram illustrating a layered sheet 7 formed in the second embossing step.
Figs. 14A to 14E are diagrams illustrating each section of the winding mechanism 26 during a replacement operation.
Fig. 15 is a diagram illustrating a variant of the main manufacturing apparatus 20.

### Mode for Carrying Out the Invention

At least the following matters will be disclosed in the present specification and accompanying drawings.

First, a method of manufacturing a roll of sheet according to an aspect of the present invention includes: forming a layered sheet by combining a plurality of overlapped fiber sheets by compression; accumulating the layered sheet, that is moving in its continuation direction, in a motion path of the layered sheet; and winding the layered sheet, wherein the forming of the layered sheet includes: performing first compression in which the layered sheet is compressed in such a manner that a plurality of first regions and a plurality of second regions are disposed in an alternating manner in the continuation direction, the second regions having a higher degree of compression than the first regions and lying along an intersecting direction that intersects with the continuation direction; and performing second compression, that is performed after the first compression, in which the layered sheet is compressed in such a manner that, among the first regions and the second regions, at least the first regions are compressed, wherein the accumulating of the layered sheet, that is performed after the first compression, includes forming a loop of the layered sheet by disposing the layered sheet along the peripheral surface of a rotatable roller, and wherein the winding of the layered sheet, that is performed after the second compression, includes winding the layered sheet on a winding mandrel located downstream of the rotatable roller.

With such a method of manufacturing a roll of sheet, since the second regions that are disposed intermissively in the continuation direction of the layered sheet in the first compression become starting points of the bending after the first compression, the layered sheet will be properly disposed along the peripheral surface of the rotatable roller and will also be properly wound on the winding mandrel. As a result, the layered sheet can be disposed along the peripheral surface of the rotatable roller while suppressing the meandering and thus the layered sheet can be wound properly.

Further, in the above-mentioned method of manufacturing a roll of sheet, in the first compression, the layered sheet may be formed in which a plurality of low-compression regions corresponding to the first regions and a plurality of high-compression regions corresponding to the second regions are disposed in an alternating manner in the continuation direction, and in which uncompressed regions that are not compressed are disposed at both end portions in the intersecting direction. In such a case, the layered sheet is given a stretchability of being capable of moderately stretching and contracting in the continuation direction and thus the above-mentioned meandering can be effectively suppressed when disposing the layered sheet along the peripheral surface of the rotatable roller.

Further, in the above-mentioned method of manufacturing a roll of sheet, a length in the intersecting direction of each of the uncompressed regions disposed at the both end portions in the intersecting direction of the layered sheet may be less than or equal to a quarter of a length in the intersecting direction of the layered sheet. When such a relationship between lengths is satisfied, each of the high-compression regions and low-compression regions will be provided on the layered sheet in such a manner that preferable amount of space is provided for each of the regions to function effectively.

Further, in the above-mentioned method of manufacturing a roll of sheet, each of the plurality of the fiber sheets may be comprised of a plurality of fiber pieces, a length of the low-compression region in the continuation direction being greater than or equal to 0.3 times an average length of the plurality of fiber pieces and being less than or equal to the average length. In such a case, since the layered sheet is provided with an appropriate tensile strength, even if the layered sheet is moved in its continuation direction while applying a tension to the layered sheet, the layered sheet can be prevented from tearing (a phenomenon in which it tears in the continuation direction) or fiber fall-out (a phenomenon in which fiber falls out in such a manner that the surface of the layered sheet fluffs up).

Further, in the above-mentioned method of manufacturing a roll of sheet, the accumulating of the layered sheet may be performed after the first compression and before performing the second compression. If the layered sheet is disposed along the peripheral surface of the rotatable roller before the second compression, layer separation (layer separation is to be described later) occurs in the second regions of the layered sheet. As a result, stretchability (stretchable flexibility) in the second regions is temporarily restored and thus the meandering can be even more effectively suppressed when disposing the layered sheet along the peripheral surface of the rotatable roller.

Further, an apparatus for manufacturing a roll of sheet can also be achieved, which includes: a layered sheet forming section that forms a layered sheet by combining a plurality of overlapped fiber sheets by compression; an accumulating section that accumulates the layered sheet, that is moving in its continuation direction, in a motion path of the layered sheet; and a winding section that winds the layered sheet into a roll, wherein the layered sheet forming section includes: a first compression section that compresses the layered sheet in such a manner that a plurality of first regions and a plurality of second regions are disposed in an alternating manner in the continuation direction, the second regions having a higher degree of compression than the first regions and lying in an intersecting direction that intersects with the continuation direction; and a second compression section that is located downstream of the first compression section and that compresses the layered sheet in such a manner that, among the first regions and the second regions, at least the first regions are compressed, wherein the accumulating section is located downstream of the first compression section and includes a rotatable roller that forms a loop of the layered sheet by disposing the layered sheet along the peripheral surface thereof, and wherein the winding section is located downstream of the second compression section and includes a winding mandrel on which the layered sheet is wound.

Such an apparatus for manufacturing a roll of sheet can achieve the above-mentioned advantageous effect and thus the layered sheet can be disposed along the peripheral surface of rotatable roller while suppressing the meandering and the layered sheet can be wound by being properly wound on the mandrel.

Further, in the above-mentioned apparatus for manufacturing a roll of sheet, the first compression section may be a pair of compression rollers that rotates while pinching the plurality of fiber sheets therebetween, and among the pair of compression rollers, on a peripheral surface of one of the compression rollers, a protruded portion that protrudes from the peripheral surface and that extends along an axis of rotation of the one of the compression rollers may be disposed intermissively along a circumferential direction of the one of the compression rollers. With such an apparatus, a layered sheet in which a plurality of first regions and a plurality of second regions are disposed in an alternating manner in a continuation direction can be easily formed.

### === A Roll of Sheet 1 ===

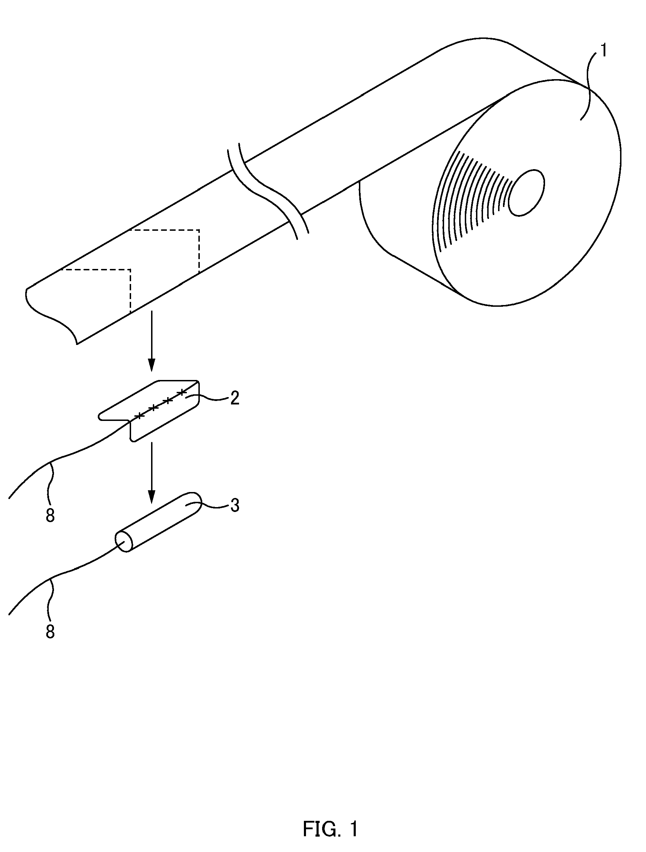

Firstly, a roll of sheet 1 will be described. The roll of sheet 1 is, as shown in Fig. 1, a sheet comprising fiber such as rayon and cotton (specifically, a layered sheet 7 described later) that is wound as into a roll. Fig. 1 is a diagram illustrating an appearance and an application of the roll of sheet 1. Describing the configuration of the roll of sheet 1 according to the present embodiment, a winding length (a length of sheet that is wound up so as to manufacture the roll of sheet 1) is approximately 135 m, a winding diameter (external diameter) is approximately 800 mm and a width (a length in a direction that intersects with a continuation direction) is approximately 50 mm.

The above-mentioned roll of sheet 1 is, for example, used as a material (whole cloth) in manufacturing an absorbent material such as a tampon. Specifically, as shown in Fig. 1, the roll of sheet 1 is reeled out in its continuation direction and the rolled-out portion is cut into a fletching shape to form a piece of sheet 2. In a state where a cord 8 is sewn onto the piece of sheet 2, the piece of sheet 2 is compressed and shaped into a bullet shape and thus a cotton body 3 illustrated in Fig. 1 is manufactured. The cotton body 3 has an appropriate absorptivity and is used, for example, as a tampon. Note that the cord 8 is provided for withdrawing the tampon (i.e., cotton body 3) out of the vaginal cavity after usage of the tampon.

### «Method of Manufacturing a Roll of Sheet 1»

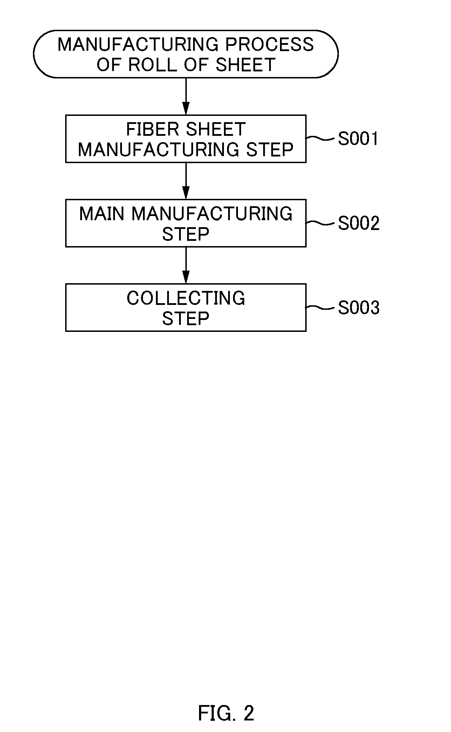

Second, a method of manufacturing the roll of sheet 1 will be described with reference to Fig. 2. Fig. 2 is a flow chart illustrating a manufacturing step of the roll of sheet 1. As shown in Fig. 2, the manufacturing step of the roll of sheet 1 includes a fiber sheet manufacturing step S001, a main manufacturing step S002 and a collecting step S003. Each of the steps will be described below.

### <Fiber Sheet Manufacturing Step>

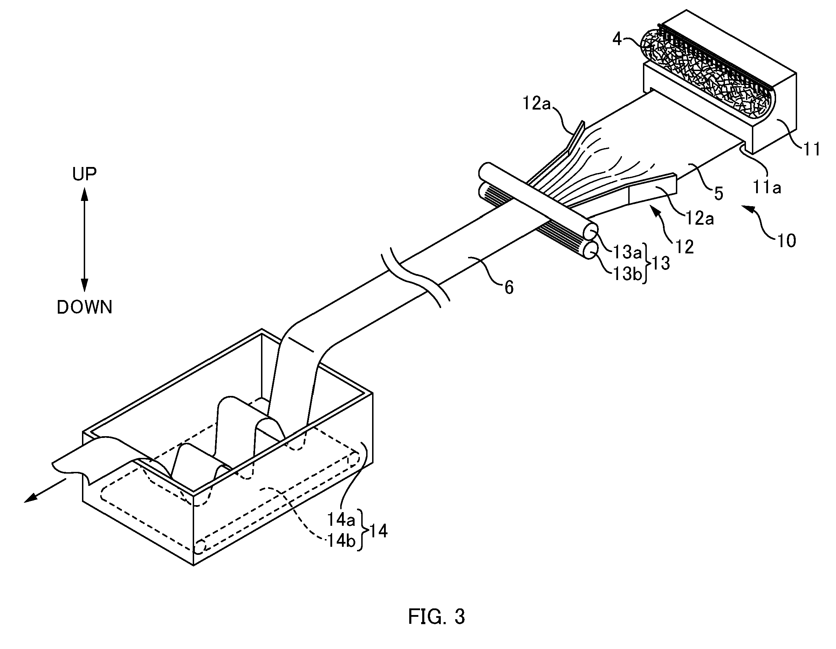

The fiber sheet manufacturing step is a step in which a fiber sheet 6 that is a constituent element of the roll of sheet 1 is manufactured. This step is performed by a fiber sheet manufacturing apparatus 10 shown in Fig. 3. Fig. 3 is a diagram illustrating the fiber sheet manufacturing apparatus 10. As shown in Fig. 3, the fiber sheet manufacturing apparatus 10 includes a carding machine 11, a gathering device 12, a pressing device 13 and a first accumulator 14.

The carding machine 11 opens a fiber mass 4 having a cocoon shape, spins the fiber pieces from the fiber mass 4 and continuously supplies a web 5 that is composed of the fiber pieces and that has a thin fabric shape. The web 5 is continuously discharged from an opening 11a formed in a casing of the carding machine 11 (see Fig. 3). With the web 5 according to the present embodiment, a weight of each portion of the web 5 (gross weight of the fiber pieces contained in a unit area) is substantially uniform and it is specifically, approximately 3.5 g/m2. A width of the web 5 is approximately 1400 mm. As for the fiber pieces that constitute the web 5, an average length is approximately 38 mm and an average fineness is approximately 3.3 dtex. Here, the average length (average fineness) is a length (fineness) of the highest frequency in a distribution range of the length (fineness) of the fiber pieces that constitutes the web 5. It is to be noted that since an orientation of the fiber pieces in the web 5 is aligned in the continuation direction of the web 5, the web 5 is tougher against a tension in the continuation direction than against a tension in a width direction (a direction that intersects with the continuation direction).

The gathering device 12 gathers the web 5 that is continuously supplied from the carding machine 11 by pressing it in its width direction. The gathering device 12 is provided with guide plates 12a that are disposed in a left-right pair in such a manner that they form a substantially Y-shape when viewed in a plan view (see Fig. 3). The gathering device 12 gathers the web 5 by pulling the web 5 supplied from the carding machine 11 using a pulling device (not shown) in such a manner that the web 5 passes between the guide plates 12a. Specifically, since a space between the guide plates 12a is narrower on a downstream side in a motion direction of the web 5 as compared to a space on an upstream side in the motion direction, the web 5 is folded in the width direction while forming pleats (folds) when passing between the guide plates 12a (see Fig. 3). As a result, the width of the web 5 will be decreased to approximately 50 mm at the time when the web 5 has passed between the guide plates 12a. As has been described above, since the web 5 is tough against a tensile force in the continuation direction, even though a tension is applied in the continuation direction of the web 5 while the gathering device 12 is gathering the web 5, the web 5 can be pulled without being torn off.

The pressing device 13 forms the fiber sheet 6 by compressing the gathered web 5 in a thickness direction. The pressing device 13 is provided with a pair of upper and lower pressing rollers 13a, 13b shown in Fig. 3 and compresses the web 5 by rotating each of the pressing rollers 13a, 13b with the web 5 being pinched between the pressing rollers 13a, 13b, to thereby form the fiber sheet 6 of a predetermined thickness from the web 5. With the pressing device 13 of the present embodiment, the fiber sheet 6 having a weight of approximately 110g/m2 and a width of approximately 50 mm is formed. Here, since the fiber sheet 6 is a sheet formed by compressing the web 5, its composition is similar to that of the web 5. That is to say, the fiber sheet 6 is composed of a plurality of fiber pieces and an average length and an average fineness of the plurality of fiber pieces are the same as the above mentioned values. It is to be noted that, in the present embodiment, the upper pressing roller 13a is a smooth roller having a smooth peripheral surface, whereas the lower pressing roller 13b is an uneven roller having a peripheral surface in which depressions and protrusions are alternately disposed in the circumferential direction. Accordingly, the gathered web 5 can be easily compressed to a predetermined thickness. Note that the lower pressing roller 13b may also be a roller having a knurled peripheral surface. In such a case, the fiber sheet 6 having a proper flexibility can be formed. Alternatively, both pressing rollers 13a and 13b may be smooth rollers.

The first accumulator 14 temporarily accumulates the fiber sheet 6 that is being continuously supplied from the pressing device 13 and properly sends out the accumulated fiber sheet 6. As shown in Fig. 3, the first accumulator 14 inputs the fiber sheet 6 into an open-topped box 14a and sends out the fiber sheet 6 by a conveyor 14b disposed in the box 14a. Now, a speed at which the fiber sheet 6 is input into the box 14a (i.e., the speed at which the fiber sheet 6 is supplied from the pressing device 13) is greater than a speed at which the fiber sheet 6 is sent out of the box 14a. Therefore, the fiber sheet 6 will be accumulated in the box 14a in a slack manner. The first accumulator 14 having such a configuration functions as a buffer in a case where the process is interrupted or the processing speed is decreased in downstream steps for example due to troubles. It is to be noted that an amount of accumulation of the fiber sheet 6 in the box 14a is monitored by a sensor (not shown). The amount of accumulation is adjusted by adjusting a send-out speed of the fiber sheet 6 (to be precise, a pull-in speed when pulling in the fiber sheet 6 into a first embossing mechanism 23 described below) in accordance with the detection result of the sensor.

In the present embodiment, a plurality of fiber sheet manufacturing apparatuses 10 (specifically, eight apparatuses) of the above-mentioned configuration is installed. The plurality of the fiber sheet manufacturing apparatus 10 is synchronizing and supplies the fiber sheet 6 to a downstream step (i.e., a main manufacturing step). That is to say, a plurality of (eight) fiber sheets 6 that is manufactured by the plurality of fiber sheet manufacturing apparatuses 10 moves to the main manufacturing step.

### <Main Manufacturing Step>

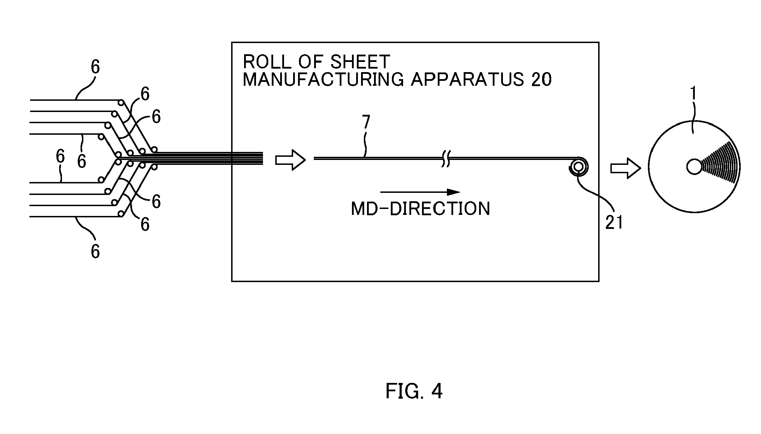

The main manufacturing step is a step in which the roll of sheet 1 is manufactured from the plurality of (eight) fiber sheets 6 that is supplied from the plurality of fiber sheet manufacturing apparatuses 10. In other words, the method of manufacturing the roll of sheet 1 that is achieved in the present step corresponds to the method of manufacturing the roll of sheet 1 of the present invention. As can be seen in Fig. 4, the present step is performed by a main manufacturing apparatus 20 (an illustrative example of a manufacturing apparatus of the roll of sheet 1). Fig. 4 is a schematic diagram illustrating the main manufacturing step. The main manufacturing step will be generally explained in the following description.

In the present step, first, each of the plurality of fiber sheets 6 moves in its continuation direction toward the main manufacturing apparatus 20. Then, the plurality of fiber sheets 6 is overlapped before being input into the main manufacturing apparatus 20. Thereafter, in the main manufacturing apparatus 20, the layered sheet 7 having a weight of approximately 880 g/m2 is formed from the plurality of fiber sheets 6. The formed layered sheet 7 moves along its continuation direction (a longitudinal direction of the layered sheet 7 and indicated as "MD-DIRECTION" in Fig. 4) within the apparatus. During this, a tension is applied in the layered sheet 7 along the continuation direction. In due course, the layered sheet 7 will be wound on a winding mandrel 21 at a terminal end (downstream end) in the motion path. The winding mandrel 21 of the present embodiment is a cylindrical body having an outer diameter of approximately 85 mm.

Then, the layered sheet 7 is cut at a point where the layered sheet 7 is wound up to a predetermined winding diameter. Finally, when the cut end portion of a wound layered sheet 7 is temporarily fixed and the layered sheet 7 is removed from the winding mandrel 21, the roll of sheet 1 is completed. Details of the main manufacturing step and the main manufacturing apparatus 20 will be described later in the section under a heading "Main Manufacturing Step of the Present Embodiment".

### <Collecting Step>

A collecting step is a step in which the roll of sheet 1 manufactured in the main manufacturing step is pinched and grabbed by a hanger (not shown), the hanger grabbing the roll of sheet 1 is conveyed to a predetermined accumulating site and the roll of sheet 1 is released from the hanger at the accumulating site so as to stack the roll of sheets 1.

### === Main Manufacturing Step of Present Embodiment ===

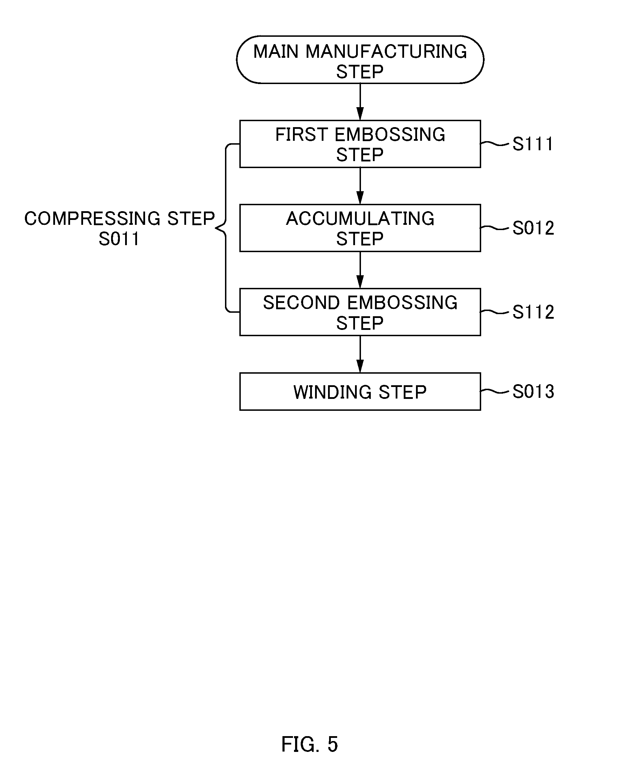

Next, the main manufacturing step of the present embodiment will be described in detail. As shown in Fig. 5, the main manufacturing step of the present embodiment includes a compression step S011 in which the layered sheet 7 is formed by combining a plurality of overlapped fiber sheets 6 by compression, an accumulating step S012 in which the layered sheet 7, that is moving in its continuation direction, is accumulated in a motion path of the layered sheet 7, and a winding step S013 in which the layered sheet 7 is wound. Fig. 5 is a flow chart illustrating the main manufacturing step. The above-mentioned steps are performed by respective mechanisms of the above-mentioned main manufacturing apparatus 20 that are handing the above-mentioned respective steps.

Hereinafter, each of the steps of the main manufacturing step will be described. Note that, in the following description, a direction corresponding to a continuation direction in which the fiber sheet 6 and the layered sheet 7 continue and a motion direction in which each of the sheets moves is referred to as a "MD-direction", and a direction corresponding to a width direction of each sheet that intersects with the continuation direction is referred to as a "CD-direction".

### «Compressing Step»

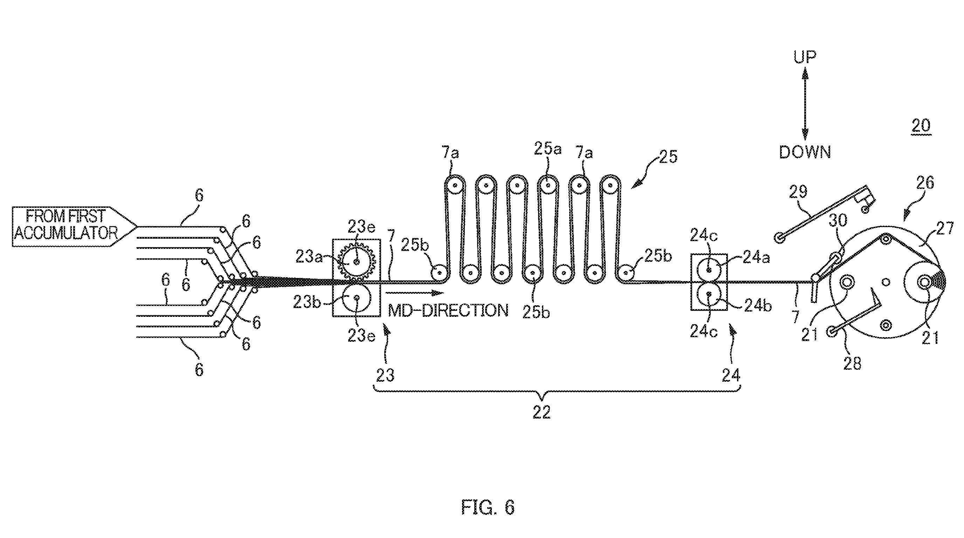

The present step is performed by a compressing apparatus 22 that is an illustrative example of a layered sheet forming section of the main manufacturing apparatus 20 illustrated in Fig. 6. Fig. 6 is a schematic diagram illustrating the main manufacturing apparatus 20. The compressing step S011 is further divided into two steps and includes a first embossing step S111 that corresponds to a first compression performed first and a second embossing step S112 that corresponds to a second compression performed afterwards (see Fig. 5).

### <First Embossing Step>

The first embossing step is a step in which a compression embossing process is performed to the plurality of fiber sheets 6 so as to form the layered sheet 7 by combining a plurality of overlapped fiber sheets 6 and is performed by a first embossing mechanism 23 illustrated in Fig. 6.

The first embossing mechanism 23 is an illustrative example of the first compression section and is, specifically, a pair of upper and lower compression rollers 23a and 23b (see Fig. 6). With the plurality of fiber sheets 6 being pinched between the pair of compression rollers 23a, 23b, each of the compression rollers 23a, 23b rotates about an axis of rotation 23e lying along the CD-direction. As a result, the plurality of fiber sheets 6 is compressed and combined and the layered sheet 7 is formed. It is to be noted that, while the compression rollers 23a, 23b are rotating with the plurality of fiber sheets 6 being pinched therebetween, each of the compression rollers 23a, 23b rubs its peripheral surface (specifically, the peripheral surface of a major diameter portion 23c described later) against the fiber sheets 6 located at outermost positions (upper side and lower side). During this, the fiber sheet 6 accumulated in the box 14a of each first accumulator 14 is pulled out of the box 14a, moves to the downstream side in the MD-direction and is pulled between the compression rollers 23a, 23b.

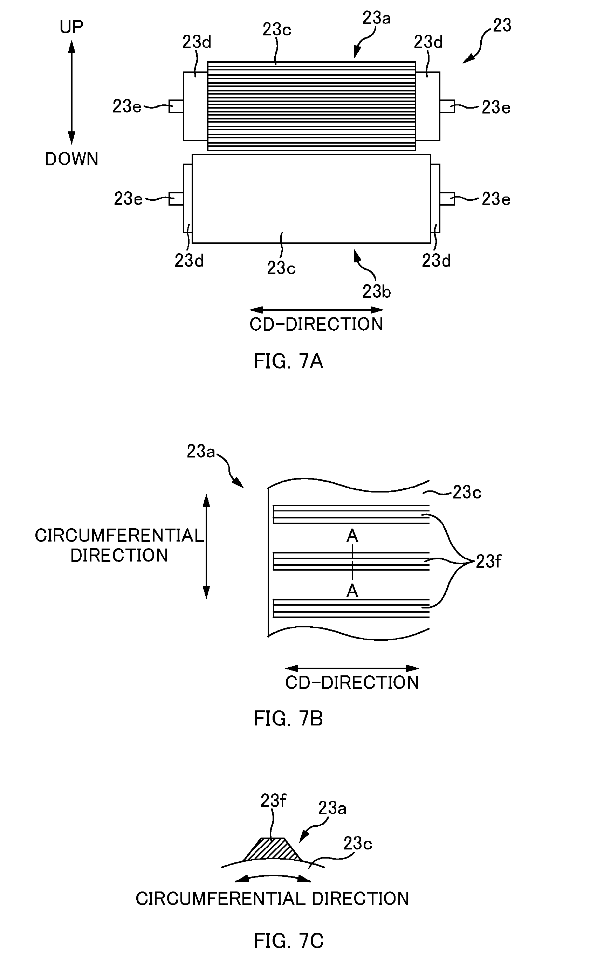

Describing the configuration of each of the compression rollers 23a, 23b, as shown in Fig. 7A, each of the compression rollers 23a, 23b has a major diameter portion 23c and a minor diameter portion having external diameters that are different with respect to each other. Fig. 7A is a front view of the compression rollers 23a and 23b. The major diameter portion 23c is located at a central portion in the CD-direction of each of the compression rollers 23a, 23b. The minor diameter portion 23d is located at each end portion in the CD-direction and its external diameter is smaller than the external diameter of the major diameter portion 23c. The length of the major diameter portion 23c in the CD-direction is different for each of the compression rollers 23a, 23b. Explaining in detail, the length in the CD-direction of the major diameter portion 23c of the upper compression roller 23a is somewhat shorter than the width of the fiber sheet 6 and the length in the CD-direction of the major diameter portion 23c of the lower compression roller 23b is somewhat longer than the wide of the fiber sheet 6. When the plurality of fiber sheets 6 passes between the compression rollers 23a and 23b, a central portion in the width direction of the plurality of fiber sheets 6 is compressed by the major diameter portions 23c of the compression rollers 23a and 23b, while a range corresponding to a predetermined length from each end in the width direction remains uncompressed.

Further, the major diameter portion 23c of the lower compression roller 23b has a smooth peripheral surface. On the other hand, the major diameter portion 23c of the upper compression roller 23a (corresponds to one of the compression rollers 23a among the pair of compression rollers 23a, 23b) has a peripheral surface on which a regular pattern is formed. Describing such a pattern, as shown in Figs. 7B and 7C, on a peripheral surface of the major diameter portion 23c of the upper compression roller 23a, protruded portions 23f that protrude from the peripheral surface and extend along the axis of rotation 23e of the upper compression roller 23a are intermissively disposed along the circumferential direction of the upper compression roller 23a. Fig. 7B is a diagram illustrating a peripheral surface of the upper compression roller 23a. Fig. 7C is a cross-sectional diagram taken along line A-A in Fig. 7B. The protruded portions 23f is substantially rectangular when viewed in a plan view (see Fig. 7B) and is substantially trapezoidal when viewed in a side view (see Fig. 7C). Explaining the size of the protruded portion 23f in detail, an amount of protrusion is approximately 1.5 mm, a length in the circumferential direction of the compression roller 23a is approximately 6 mm, a length of a top surface in the circumferential direction is approximately 2 mm and a length along the axis of rotation 23e is approximately 40 mm. The protruded portions 23f of the above-mentioned configuration extend from one end to the other end of the major diameter portion 23c in a direction along the axis of rotation 23e (i.e., CD-direction) and are intermissively disposed with an interval of approximately 15 mm between the protruded portions 23f.

An operation of the first embossing mechanism 23 of the above configuration and the layered sheet 7 formed in the first embossing step will be described later.

### <Second Embossing Step>

The second embossing step is a step that is performed after the first embossing step and that performs a compression embossing step, and, in order to form the layered sheet 7 of the predetermined thickness, applies a compression embossing process, which is different from that of the compression embossing step in the first embossing step, on the layered sheet 7 formed in the first embossing step. This step is a preparation step for the winding step and is performed for properly winding the layered sheet 7.

In other words, in a step of winding the layered sheet 7, the layered sheet 7, specifically a portion located on an outer side in the radial direction, experiences a tensile force that acts in its circumferential direction (i.e., in the continuation direction of the layered sheet 7). If the layered sheet 7 does not have a sufficient tensile strength against such a tensile force, the layered sheet 7 may tear along the MD-direction and crimps may occur at the surface of the layered sheet 7 due to the tensile force. On the other hand, the tensile strength in the layered sheet 7 becomes higher as it gets more compressed in the thickness direction. Accordingly, before the winding step, the layered sheet 7 formed in the first embossing step is compressed in the thickness direction so as to form a layered sheet 7 having a reduced thickness. As a result, the layered sheet 7 is provided with a sufficient tensile strength against the tensile force.

The second embossing step is performed by a second embossing mechanism 24 shown in Fig. 6. The second embossing mechanism 24 is an example of the second compression section and is specifically a pair of upper and lower patterned rollers 24a and 24b (see Fig. 6). The pair of patterned rollers 24a, 24b is located downstream of the pair of compression rollers 23a, 23b, and, with the layered sheet 7 being pinched between the patterned rollers 24a, 24b, each of the patterned rollers 24a, 24b rotates about the axis of rotation 24c that lies along the CD-direction. As a result, the layered sheet 7 of a predetermined thickness is formed. It is to be noted that the patterned rollers 24a, 24b are synchronized with the winding mechanism 26 described later and its rotational speed is the same as a winding speed when winding the layered sheet 7 in the winding step.

Each of the patterned rollers 24a, 24b has, in the same manner as the compression rollers 23a, 23b, a major diameter portion located at a central portion in the CD-direction and a minor diameter portion located at each end in the CD-direction of each of the patterned rollers 24a, 24b. Since a length in the CD-direction of the major diameter portion of each of the patterned rollers 24a, 24b is somewhat longer than the width of the layered sheet 7, the major diameter portion comes in contact with substantially entire region of the surface of the layered sheet 7 when the layered sheet 7 passes between the patterned rollers 24a, 24b. That is to say, the second embossing mechanism 24 applies a compression embossing process on substantially entire region of the layered sheet 7.

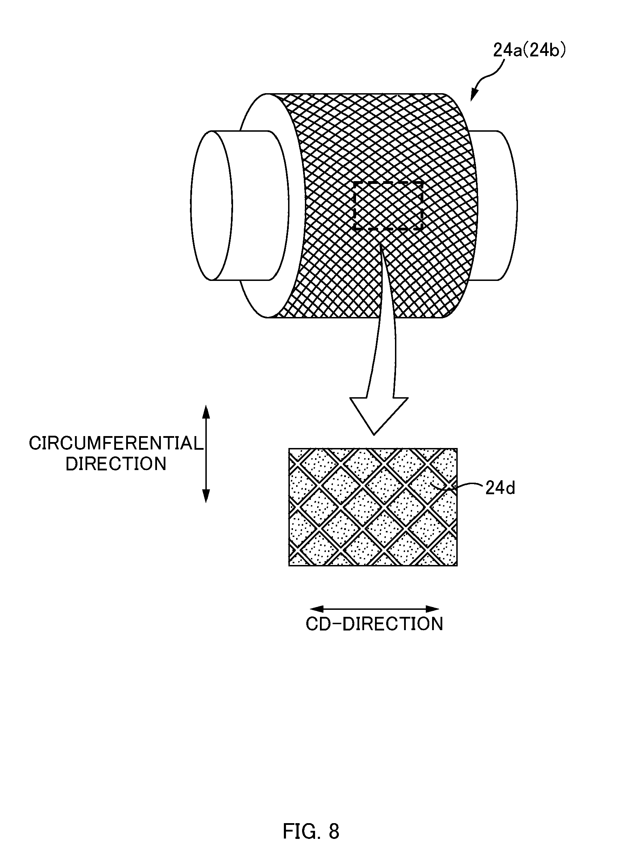

The peripheral surface of the major diameter portion of each of the patterned rollers 24a, 24b is provided with a lattice pattern shown in Fig. 8. Fig. 8 is a diagram illustrating a pattern formed on the peripheral surface of patterned rollers 24a and 24b. Explaining about the pattern, protruded portions 24d each having a substantially square shape when viewed in a plan view are regularly disposed on an entire region of the peripheral surface in a state where each of its sides is inclined approximately 45 degrees against the circumferential direction of the patterned rollers 24a, 24b. Note that one of the sides of the protruded portions 24d is approximately 2.3 mm and a gap of approximately 1 mm is formed between the protruded portions 24d.

In the second embossing step, with the second embossing mechanism 24 of the above-mentioned structure, the layered sheet 7 having a thickness which is somewhat reduced as compared to a state where it was formed in the first embossing step is formed. Then, the thickness of the layered sheet 7 formed in the second embossing step is maintained until the step of manufacturing the roll of sheet 1 by winding the layered sheet 7. On the other hand, the roll of sheet 1 serving as a whole cloth of an absorbent article such as a tampon requires an appropriate absorptivity (liquid absorptivity) and the absorptivity depends on the thickness of the layered sheet 7 composing the roll of sheet 1. For such a reason, in order to obtain a desired absorptivity, in the second embossing step, the layered sheet 7 is compressed to a thickness corresponding to the desired absorptivity. An operation of the second embossing mechanism 24 and the layered sheet 7 formed in the second embossing step will be described later.

### «Accumulating Step»

This step is performed by a second accumulator 25 that is an illustrative example of the accumulating section of the main manufacturing apparatus 20 (see Fig. 6). The second accumulator 25 is located downstream of the first embossing mechanism 23 and is located upstream of the second embossing mechanism 24. Therefore, in the present embodiment, the accumulating step is performed after the first embossing step S111 and before the second embossing step S112. (See Fig. 5)

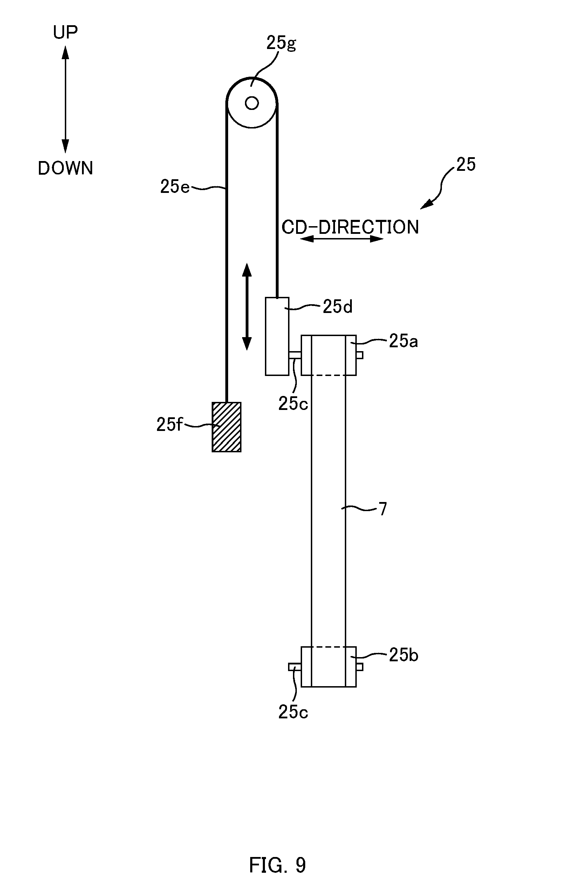

The second accumulator 25 includes a dancer roller 25a and a fixed roller 25b that are illustrative examples of the rotatable rollers (see Fig. 6). The dancer roller 25a is a roller that is located downstream of the first embossing mechanism 23 and rotates about the axis of rotation 24c that lies along the CD-direction. In the present embodiment, a plurality of dancer rollers 25a is provided in an aligned manner in the MD-direction. As shown in Fig. 9, the axis of rotation 25c of each of the dancer rollers 25a is fixed on a supporting frame 25d. Fig. 9 is a side view (viewed in the MD-direction) of a second accumulator 25. A weight member 25f is connected to the supporting frame 25d via a connecting belt 25e. The connecting belt 25e is hung on an ascending/descending bar 25g and the supporting frame 25d and the weight member 25f are suspended from the ascending/descending bar 25g. Further, the ascending/descending bar 25g can reciprocate in the vertical direction and the reciprocating movement is achieved by controlling a balance between a load of the weight member 25f and a tension exerted on the layered sheet 7.

Explaining in detail, the layered sheet 7 is disposed along the peripheral surface of each dancer roller 25a and the dancer roller 25a is slightly lifted upwards due to the weight member 25f. Thus, a tension is exerted on the layered sheet 7 disposed along the peripheral surface of the dancer roller 25a. A magnitude of the tension depends on a motion speed of the layered sheet 7 that is moving at a downstream side of the second embossing mechanism 24. For example, during a switch over from a steady operation to a replacing operation (the steady operation and the replacing operation will be described later), if the second embossing mechanism 24 stops (i.e., if the rotation of the patterned rollers 24a, 24b stops), a portion of the layered sheet 7 located downstream of the position pinched between the patterned rollers 24a, 24b will stop. As a result, the above-mentioned tension decreases. The ascending/descending bar 25g ascends when the tension is less than the load of the weight member 25f and descends when the tension is greater than the load of the weight member 25f.

With such motion of the ascending/descending bar 25g, each dancer roller 25a reciprocates in the vertical direction together with the supporting frame 25d.

The fixed roller 25b is located below the dancer roller 25a in the vertical direction and rotates about the axis of rotation that lies along the CD-direction. Further, there are also a plurality of fixed roller 25b provided so as to align along the MD-direction.

The second accumulator 25 of the above structure forms a loop 7a of the layered sheet 7 by disposing the layered sheet 7 along the peripheral surface of each dancer roller 25a and each fixed roller 25b. (I.e., the dancer roller 25a forms the loop 7a with the layered sheet 7 being disposed along its peripheral surface).

As a result, the layered sheet 7 that is moving in the MD-direction will be accumulated in its motion path by a length of loop 7a (hereinafter referred to as an amount of loop). That is to say, the accumulating step is a step in which layered sheet 7 is temporality accumulated in the motion path by forming the loop 7a, which is formed by disposing the layered sheet 7, that is moving in the MD-direction, along the peripheral surfaces of the dancer roller 25a and the fixed roller 25b. Here, the loop 7a of the layered sheet 7 is a portion of the layered sheet 7 that is in a substantially Ω-shape by being disposed along the peripheral surface of the dancer roller 25a. In the present embodiment, since the plurality of dancer rollers 25a is aligned in the MD-direction, a plurality of (in this embodiment, six) loops 7a are formed in the MD-direction (see Fig. 6). The total amount of loop of the plurality of loops 7a corresponds to the total amount of accumulation of the layered sheet 7 accumulated by the second accumulator 25.

Further, the second accumulator 25 moves each dancer roller 25a upwards and downwards by moving the ascending/descending bar 25g upwards and downwards. In detail, each dancer roller 25a reciprocates in a range between a position that is approximately 400 mm upward of a position in a vertical direction at which the fixed roller 25b is located (hereinafter referred to as a bottom dead point) and a position that is approximately 1600 mm upward of the position at which the fixed roller 25b is located (hereinafter referred to as a top dead point). With such reciprocation of the dancer roller 25a, the amount of loop of the loop 7a, i.e., the amount of accumulation of the layered sheet 7, varies. In other words, with the reciprocation of the dancer roller 25a, a period of time during which the layered sheet 7 is accumulated in the motion path (hereinafter referred to as an accumulating time) can be varied.

It is to be noted that the motion speed of the layered sheet 7 that is moving in the MD-direction while being disposed along the peripheral surfaces of the dancer roller 25a and the fixed roller 25b is the same speed as the speed at which the layered sheet 7 is wound.

### «Winding Step»

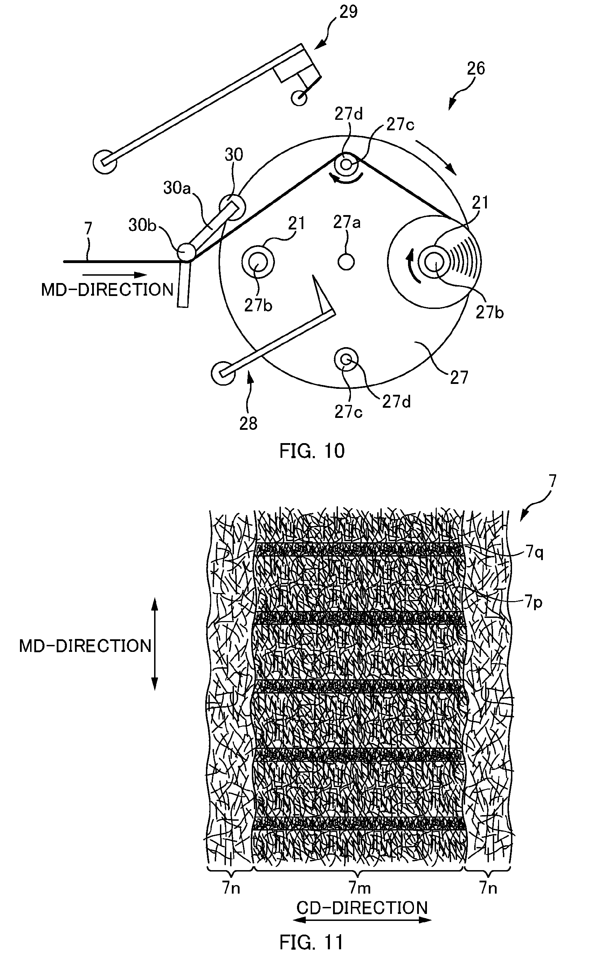

This step is performed by the winding mechanism 26 of the main manufacturing apparatus 20 after the second embossing step (see Fig. 6) . The winding mechanism 26 is given as one of the examples of the winding section and is located downstream of the second embossing mechanism 24. As shown in Fig. 10, the winding mechanism 26 includes a turntable 27, a winding mandrel 21, a cutter 28, a tape applying machine 29 and a pushing roller 30. Fig. 10 is a diagram illustrating the winding mechanism 26.

The turn table 27 is a disk-shaped member that rotates about the center shaft 27a lying along the CD-direction. The winding mandrel 21 is located downstream of the dancer roller 25a and the second embossing mechanism 24 and is fitted on a winding mandrel shaft 27b extruding in the CD-direction from the surface of the turn table 27. The winding mandrel shaft 27b rotates with the winding mandrel 21 in an integrated manner under a driving force from a rotating mechanism (not shown). As a result, the layered sheet 7 is wound on the winding mandrel 21 and the layered sheet 7 is wound up. The turn table 27 of the present embodiment is provided with two winding mandrel shaft 27b and each winding mandrel shaft 27b is fitted with the winding mandrel 21. While the layered sheet 7 is being wound on one of the winding mandrels 21, the other winding mandrel 21 is in a standby state (a state in which the layered sheet 7 is not wound). Note that the two winding mandrels 21 are spaced apart from each other for a distance corresponding to an amount of rotation of approximately 180 degrees in a direction of rotation of the turn table 27. Also, the rotational speed of the winding mandrel 21 (i.e., the winding speed while winding the layered sheet 7) may vary.

Further, the turn table 27 is provided with a roller shaft 27c located substantially at the middle between the two winding mandrel shafts 27b in the direction of rotation and the guide roller 27d is supported by the roller shaft 27c in a freely rotatable manner (see Fig. 10.) On the peripheral surface of the guide roller 27d, the layered sheet 7 is disposed on the upstream side of the winding mandrel 21 on which the layered sheet 7 is wound. In such a state, the guide roller 27d restricts the motion direction of the layered sheet 7 in such a manner that the layered sheet 7 proceeds towards the winding mandrel 21 and also applies a tension on the layered sheet 7 by bending the layered sheet 7.

The cutter 28 is spaced apart from the layered sheet 7 while the layered sheet 7 is being wound on the winding mandrel 21 and, at the stage where the layered sheet 7 has been wound up for a predetermined length, comes into contact with the layered sheet 7 and cuts the layered sheet 7. At the time of replacement of the winding mandrel 21 (i.e., at an interruption time of the winding step S013), the tape applying machine 29 attaches an upper end portion of the layered sheet 7 (specifically, a portion that has newly become an upstream side portion as a result of the cutting of the layered sheet 7) by an adhesive tape to the peripheral surface of the winding mandrel 21 that has been in the standby state.

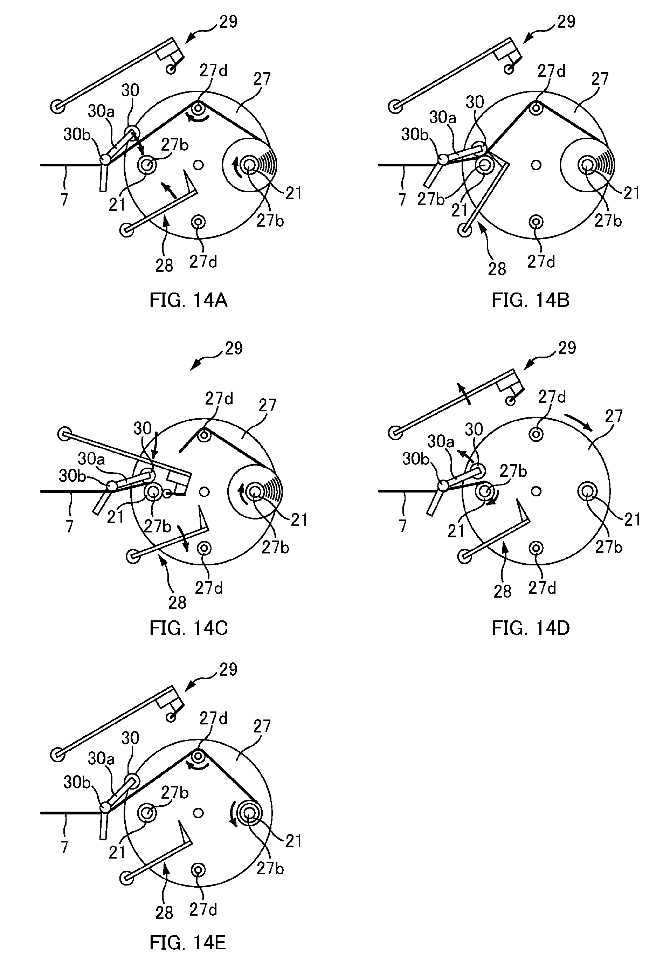

The pushing roller 30, together with the cutter 28, pinches the layered sheet 7 when the cutter 28 cuts the layered sheet 7 and pushes the upstream end portion of the layered sheet 7 against the peripheral surface of the winding mandrel 21 when the tape applying machine 29 attaches the layered sheet 7 to the winding mandrel 21 (e.g., see Figs. 14B and 14C). As shown in Fig. 10, the pushing roller 30 is rotatably supported at a tip end portion of an arm 30a and the arm 30a can swing about a swing shaft 30b against which the layered sheet 7 is disposed.

With the winding mechanism 26 of such a structure, each of the sections of the winding mechanism 26 cooperates so as to perform the winding step in which the layered sheet 7 is wound on the winding mandrel 21 and, when the winding step has interrupted, to replace the winding mandrel 21 and carry out a setting for winding the layered sheet 7 on the winding mandrel 21 which was in a standby state.

### «Example of Operation of Main Manufacturing Apparatus 20»

Now, an illustrative operation of the main manufacturing apparatus 20 will be described. The following description will be divided into an explanation of an operation example during which the layered sheet 7 is wound at a predetermined winding speed (hereinafter referred to as a steady operation) and an operation example from the interruption of the winding of the layered sheet 7 until the resumption of the winding after replacing the winding mandrel 21 (hereinafter referred to as a replacing operation)

### <Steady Operation>

In the steady operation, the layered sheet 7 is wound at a winding speed of approximately 54 m/min in the winding step. In other words, in the main manufacturing apparatus 20, the layered sheet 7 moves in the MD-direction at the same speed as the winding speed. Also, during the steady operation, each section of the main manufacturing apparatus 20 is in a state shown in Fig. 6. Explaining in detail, in the second accumulator 25, in order that each of the dancer rollers 25a comes to a rest at the bottom dead point, the tension exerted on the layered sheet 7 disposed along the peripheral surface of the dancer roller 25a and the load of the weight member 25f are in equilibrium. In the winding mechanism 26, each of the cutter 28 and the tape applying machine 29 is located at a position spaced apart from the layered sheet 7. In such a state, the overlapped plurality of fiber sheets 6 is input into the main manufacturing apparatus 20.

In the main manufacturing apparatus 20, firstly, the first embossing step is performed. That is to say, the plurality of fiber sheets 6 is pulled in between the pair of compression rollers 23a, 23b in a rotating state. At this time, a central portion in the CD-direction (an intersecting direction that intersects with the continuation direction) of the plurality of fiber sheets 6 is pinched and compressed between the major diameter portions 23c of the compression rollers 23a, 23b. On the other hand, as has been described above, both end portions in the CD-direction of the plurality of fiber sheets 6 remain uncompressed. As a result, the overlapped plurality of fiber sheets 6 is combined at a portion that has been compressed and thus the layered sheet 7 illustrated in Fig. 11 is formed. Fig. 11 is a diagram illustrating the layered sheet 7 formed in the first embossing step. Explaining the above-mentioned layered sheet 7, as shown in Fig. 11, a compressed region 7m, that is compressed, is disposed at a center portion in the CD-direction and uncompressed regions 7n, that are not compressed, are disposed at both end portions in the CD-direction.

Also, the center portion in the CD-direction of the plurality of fiber sheets 6 is further compressed at a regular interval in the MD-direction by being pressed by protruded portions 23f provided on the major diameter portion 23c of the upper compression roller 23a. As a result, in the compressed region 7m of the layered sheet 7, two regions having mutually different degrees of compression are alternately disposed in the MD-direction (continuation direction) (see Fig. 11).

Explaining in detail, with the first embossing step, the layered sheet 7 provided with a low-compression region 7p and a high-compression region 7q that are alternately disposed in the MD-direction is formed. The low-compression region 7p is a region corresponding to a first region (a concept used in comparison with a second region described below). The high-compression region 7q corresponds to a second region that has a higher degree of compression than the first region and that lies along the CD-direction. Here, the degree of compression indicates a degree of change of the number of fiber pieces contained in a unit volume (i.e., fiber density) before and after the compression and specifically indicates an amount of change of the thickness before and after the compression. It is to be noted that, in the present embodiment, a thickness of the low-compression region 7p is approximately 13 mm and a thickness of the high-compression region 7q is approximately 2 mm.

As has been described above, the first embossing step is a step of forming the layered sheet 7 in which the plurality of low-compression regions 7p and the plurality of high-compression regions 7q are alternately disposed in the MD-direction. In the present embodiment, the layered sheet 7 is formed in such a manner that the length of the low-compression region 7p in the MD-direction (approximately 15 mm) is greater than or equal to 0.3 times an average length of the plurality of fiber pieces constituting each of the fiber sheets 6 (approximately 38 mm) and less than or equal to the average length. When the length of the low-compression region 7p is within the above-mentioned range, the fiber pieces oriented along the MD-direction in the low-compression region 7p will be more strongly combined with each other and thus the tensile strength of the layered sheet 7 against the tension in the MD-direction will be improved. As a result, even if the layered sheet 7 is moved in the MD-direction while applying a tension on the layered sheet 7, the tearing of the layered sheet 7 and fiber fall-out at the surface of the layered sheet 7 can be prevented. Note that, although the length of the low-compression region 7p is not limited to the above-mentioned range, when, for example, forming the layered sheet 7 having a weight of 400 g/m2 to 1200 g/m2, it is preferable that the length is within the above-mentioned range.

Further, in the first embossing step of the present embodiment, the layered sheet 7 is formed in which the plurality of low-compression regions 7p and the plurality of high-compression regions 7q are alternately disposed and the uncompressed regions 7n are formed on both end portions in the CD-direction. Since the uncompressed region 7n is more flexible than the compressed region 7m and the uncompressed regions 7n are disposed so as to be continuous along the MD-direction, the layered sheet 7 will have stretchability for properly stretching in the MD-direction.

With the layered sheet 7 having the high-compression region 7q provided at the center portion in the CD-direction and the uncompressed regions 7n provided at both end portions in the CD-direction, each of the high-compression region 7q and the low-compression regions 7p functions effectively. Note that in the present embodiment, the length in the CD direction of each of the uncompressed regions 7n provided at both end portions in the CD-direction of the layered sheet 7 is less than or equal to a quarter of the length (approximately 50 mm) in the CD-direction of the layered sheet 7 and, specifically, approximately 7 mm to 10 mm. Accordingly, each of the high-compression region 7q and the uncompressed regions 7n will be ensured on the layered sheet 7 with a space suitable for each of the regions to function effectively.

The layered sheet 7 of the above-mentioned configuration is easily formed by the first embossing mechanism 23. Explaining in detail, the first embossing mechanism 23 is a pair of compression rollers 23a, 23b and, on the peripheral surface of one of the compression rollers (upper compression roller) 23a, the protruded portions 23f extending along the CD-direction are intermissively disposed in the circumferential direction of the one of the compression rollers 23a. Then, when the overlapped plurality of fiber sheets 6 is pinched between the compression rollers 23a, 23b in a rolling state, the layered sheet 7 on which the plurality of low-compression regions 7p and the plurality of high-compression regions 7q are alternately disposed in the MD-direction can be formed easily.

The layered sheet 7 formed in the first embossing step moves to the downstream side in the MD-direction and is eventually input into the second accumulator 25. Then, the accumulating step by the second accumulator 25 is performed and the layered sheet 7 moving in the MD-direction will be temporarily accumulated in its motion path. That is to say, the layered sheet 7 is disposed along the peripheral surface of each of the dancer rollers 25a and the loop 7a of the layered sheet 7 is formed.

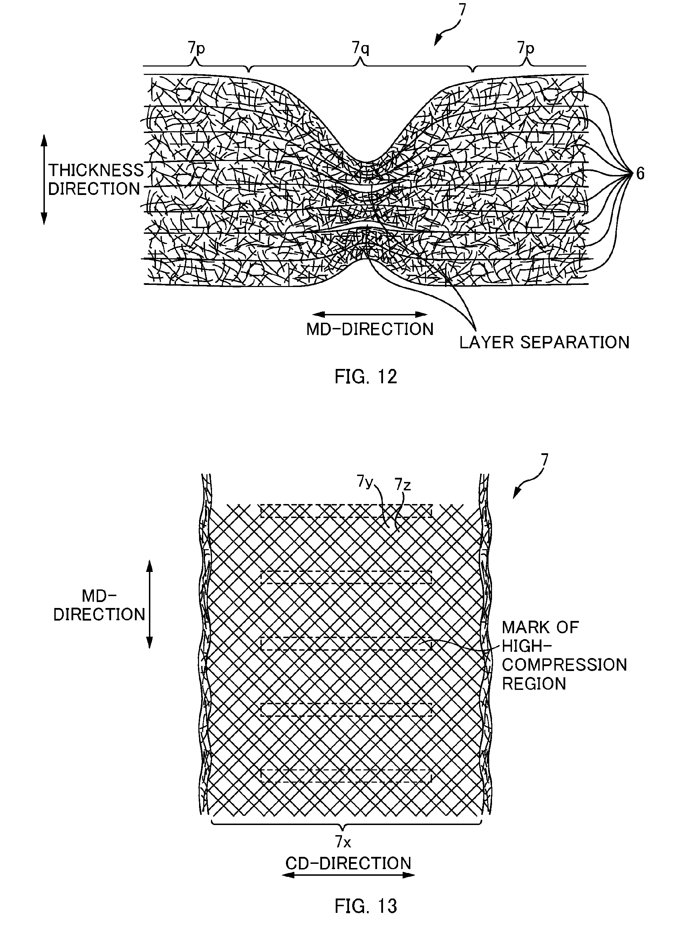

Also, as has been described above, since the layered sheet 7 is disposed along the peripheral surface of the dancer roller 25a that is in a lifted state due to the weight member 25f, it will move in the second accumulator 25 in a state where the tension is applied. During this, layer separation due to the above-mentioned tension occurs in the high-compression region 7q of the layered sheet 7. The layer separation is, as shown in Fig. 12, a phenomenon in which the plurality of fiber sheets 6 that has been combined together into the layered sheet 7 separates to such an extent that a combined state can be maintained. Fig. 12 is a cross-sectional view of the layered sheet 7 in which layer separation has occurred. When the layer separation occurs, the thickness of the high-compression region 7q of the layered sheet 7 somewhat increases and thus the stretchability (stretchable flexibility) in the high-compression region 7q temporarily recovers.

The layered sheet 7 that is temporarily accumulated in the second accumulator 25 leaves the second accumulator 25 and further moves to the downstream side in the MD-direction. Thereafter, the second embossing step is performed at the second embossing mechanism 24. That is to say, the layered sheet 7 is pulled in between the pair of patterned rollers 24a, 24b in a rotating state.

Then, when the layered sheet 7 passes between the pair of patterned rollers 24a and 24b, a compression embossing process is applied on substantially entire region of the layered sheet 7. As a result, the layered sheet 7 illustrated in Fig. 13 is formed. Fig. 13 is a diagram illustrating the layered sheet 7 formed in the second embossing step. Explaining the above-mentioned layered sheet 7, as shown in Fig. 13, at the center portion in the CD-direction, an embossed region 7x having a lattice-shaped embossing pattern formed thereon is provided on substantially entire region of the layered sheet 7. The embossed region 7x is a region that includes square-shaped depressed portions 7y that are disposed regularly and a non-depressed portion 7z surrounding the depressed portions 7y and has a width substantially the same as the width of the layered sheet 7 (specifically, a width that is slightly shorter than the layered sheet 7).

It is to be noted that a mark of the high-compression region 7q remains on the embossed region 7x (see Fig. 13). That is to say, in the present embodiment, the second embossing step is performed in such a manner that a degree of compression of the embossed region 7x is lower than a degree of compression of the high-compression region 7q.

As has been described above, the second embossing step is a step of forming the layered sheet 7 having a predetermined thickness in which, among the low-compression region 7p (first region) and the high-compression region 7q (second region), at least the low-compression region 7p (in the present embodiment, the entirety of the center portion in the CD-direction including the compressed region 7m) is compressed. In the present embodiment, the layered sheet 7 is formed in which its thickness (in detail, the thickness of the non-depressed portion 7z) is compressed to approximately 3.5 mm. It is to be noted that, in the second embossing step, since the layered sheet 7 that has been properly compressed is formed, the roll of sheet 1 manufactured from the layered sheet 7 will have a desired quality (specifically, absorptivity).

The layered sheet 7 formed in the second embossing step further moves to the downstream side in the MD-direction. The layered sheet 7 moves in the MD-direction with its motion direction being restricted by the guide roller 27d and eventually wound on the winding mandrel 21 in a rotating state at the terminal end of its motion path. That is to say, the winding step by the winding mechanism 26 is performed and the layered sheet 7 is wound at the above-mentioned winding speed.

### <Replacing Operation>

When the layered sheet 7 has been wound for a predetermined length, the winding step is interrupted and the operation of the main manufacturing apparatus 20 is switched over from the steady operation to the replacing operation. Then, when switching over to the replacing operation, in the second accumulator 25, each of the dancer rollers 25a is lifted by approximately 1200 mm towards the top dead point. Explaining in detail, when the winding step is interrupted, while the mechanisms (first embossing mechanism 23 and second accumulator 25) located upstream of the second embossing mechanism 24 remain operating, the operation of the second embossing mechanism 24 (i.e., rotation of the patterned rollers 24a, 24b) will stop. Accordingly, a portion of the layered sheet 7 that is located downstream of the portion pinched between the patterned rollers 24a, 24b stops and a tension exerted on the layered sheet 7 disposed along the peripheral surface of the dancer roller 25a will drop and becomes lower than the load of the weight member 25f. Due to this, the ascending/descending bar 25g will ascend and each of the dancer rollers 25a will also ascend towards the top dead point.

Then, due to the ascending of the dancer roller 25a, the total amount of loop of the loops 7a of the layered sheet 7 formed at the second accumulator 25, i.e., the total amount of accumulation of the layered sheet 7 will increase. As a result, the accumulating time of the layered sheet 7 at the second accumulator 25 is increased (in the present embodiment, it will be increased by approximately 16 seconds.) Accordingly, since the amount of layered sheet 7 that can be accumulated in the second accumulator 25 is increased, the portion of the layered sheet 7 that is located downstream of the portion pinched between the patterned rollers 24a, 24b can be stopped for a period of time corresponding to the amount of increase (an amount of increase of the accumulation time). That is to say, an inflow of the layered sheet 7 into the winding mechanism 26 can be stopped for the amount of increase of the above-mentioned accumulation time while maintaining the operation of the mechanisms located upstream of the second embossing mechanism 24.

On the other hand, at the winding mechanism 26, as shown in Fig. 14A, the cutter 28 approaches the layered sheet 7 and the pushing roller 30 pushes down and bends the layered sheet 7 by the swinging of the arm 30a. Figs. 14A to 14E are diagrams illustrating each section of the winding mechanism 26 during the replacement operation. Then, as shown in Fig. 14B, the cutter 28 and the pushing roller 30 pinches the layered sheet 7 therebetween. At this time, the pushing roller 30 pushes the layered sheet 7 against the peripheral surface of the winding mandrel 21 on which the layered sheet 7 has not yet been wound (hereinafter referred to as the stand-by winding mandrel 21). In such a state, the cutter 28 cuts the layered sheet 7 near the stand-by winding mandrel 21. Thereafter, as shown in Fig. 14C, while the cutter 28 is moving away from the layered sheet 7, the tape applying machine 29 moves in such a manner that it comes into contact with an upstream end portion of the layered sheet 7 that is pushed against the peripheral surface of the stand-by winding mandrel 21. Then, after having attached the upstream end portion of the layered sheet 7 to the stand-by winding mandrel 21, the tape applying machine 29 move away from the layered sheet 7 and comes back to its original position.

With the operation described above, the replacing of the winding mandrel 21 is completed. When the replacing of the winding mandrel 21 is completed, as shown in Fig. 14D, the pushing roller 30 comes back to its original position by the swinging of the arm 30a, the winding mandrel 21 on which the upstream end portion of the layered sheet 7 is attached (the winding mandrel 21 that has been in a stand-by state until then) is rotated and the layered sheet 7 will be wound on such winding mandrel 21. That is to say, the winding step, that has been interrupted, resumes. With the resumption of the winding step, e the second embossing mechanism 24 will be in operation again (i.e., the patterned rollers 24a, 24b will start rotating again), and thus the layered sheet 7 that has been stopped in a state where it is pinched between the patterned rollers 24a, 24b will start moving to the downstream side in the MD-direction and will flow into the winding mechanism 26. On the other hand, the winding mandrel 21 on which the layered sheet 7 has already been wound (hereinafter referred to as a wound-up winding mandrel 21) will stop after having rotated until the downstream end portion (a portion that became the downstream end portion by being cut by the cutter 28) of the layered sheet 7 is wound up. Thereafter, with a removing device (not shown), the roll of layered sheet 7 (i.e., the roll of sheet 1) is removed from the wound-up winding mandrel 21.

Then, at the same time as the resumption of the winding step, the turn table 27 rotates. At the time the turn table 27 has rotated through 180 degrees, as shown in Fig. 14E, a position at which each section of the winding mechanism 26 is located becomes the same position as in the steady operation. Thereafter, the operation of the main manufacturing apparatus 20 switches over again from the replacing operation to the steady operation. Note that the time required from the interruption to the resumption of the winding step is approximately 5 seconds and is sufficiently shorter than an amount of increase of the accumulation time (approximately 16 seconds).

At the time the winding step has resumed, in the second accumulator 25, each dancer roller 25a is positioned at the top dead point and the amount of accumulation of the layered sheet 7 in the second accumulator 25 is greater than the amount of accumulation during the steady operation by an amount that has been increased due to the lifting of the dancer roller 25a. Therefore, when switching over from the replacing operation to the steady operation, in order to move each dancer roller 25a from the top dead point to the bottom dead point, the layered sheet 7 needs to be wound more by an amount corresponding to a difference from the amount of accumulation during the steady operation (i.e., an amount of increase due to the lifting of the dancer roller 25a) and the amount of accumulation in the second accumulator 25 needs to be reduced by the above-described amount of difference.

Therefore, in the present embodiment, for some time after the resumption of the winding step (specifically, approximately 115 seconds), the rotational speed of the winding mandrel 21, i.e., the winding speed of the layered sheet 7, is increased to a speed (specifically, approximately 58 m/min) that is faster than the speed at the steady operation (approximately 54 m/min). Accordingly, a tension smaller than the load of the weight member 25f will act on a portion of the layered sheet 7 disposed along the peripheral surface of the dancer roller 25a. Due to this, the ascending/descending bar 25g descends and each dancer roller 25a will also descend towards the bottom dead point. As the dancer roller 25a descends, the amount of accumulation of the layered sheet 7 in the second accumulator 25 will gradually decrease, and at the time the dancer roller 25a has reached the bottom dead point, the above-mentioned amount of accumulation will be back to the amount of accumulation at the steady operation. At such a point, the winding speed will be decreased to a speed at the steady operation, and the tension acting on the layered sheet 7 disposed along the peripheral surface of the dancer roller 25a and the load of the weight member 25f will be in equilibrium in such a manner that each dancer roller 25a comes to a rest at the bottom dead point. After completion of a series of processes described above, the operation of the main manufacturing apparatus 20 will be switched over to the steady operation.

### ===Effectiveness of the Present Embodiment===

With the configuration of the main manufacturing apparatus 20 (procedure in the main manufacturing step) described above, according to the present embodiment, the layered sheet 7 formed by compressing and combining the overlapped plurality of fiber sheets 6 can be properly disposed along the peripheral surface of the dancer roller 25a while suppressing the meandering in the accumulating step (in the second accumulator 25). Further, the above-mentioned layered sheet 7 can be wound well by properly winding it on the winding mandrel 21 in the winding step (in the winding mechanism 26). Hereinafter, the effectiveness of the present embodiment will be described in detail.

In order to properly wind the layered sheet 7, the layered sheet 7 needs to be compressed in the thickness direction. This is because, as has been described above, as the layered sheet 7 becomes more compressed in the thickness direction, the tensile strength against the tensile force acting on the layered sheet 7 while winding the layered sheet 7 becomes greater. However, when the layered sheet 7 is compressed in the thickness direction, while the above-mentioned tensile strength becomes greater, the stiffness (rigidity) of the layered sheet 7 also becomes greater. As the stiffness becomes greater, it becomes more difficult to bend the layered sheet 7 along the peripheral surface of the winding mandrel 21. As a result, the layered sheet 7 may not be wound well on the winding mandrel 21. Even if the layered sheet 7 is wound on the winding mandrel 21, inappropriate bending may occur in the layered sheet 7 during winding and the layered sheet 7 may drop off from the winding mandrel 21. Such troubles may occur most significantly when the weight of the layered sheet 7 is great (e.g., greater than or equal to 400 g/m2).

Further, when forming the loop 7a of the layered sheet 7 when disposing the layered sheet 7 along the peripheral surface of the dancer roller 25a in the accumulating step, if the stiffness of the layered sheet 7 is high (i.e.,if the layered sheet 7 lacks stretchability), the layered sheet 7 may bend at inappropriate positions and will meander. (The layered sheet 7 that should essentially be bent over at the dancer roller 25a and move in the vertical direction may move in a direction inclined with respect to the vertical direction.) The meandering of the layered sheet 7 prominently occurs when a tension acts on the layered sheet 7 that is disposed along the peripheral surface of the dancer roller 25a. Further, if the above-mentioned tension varies when the operation of the main manufacturing apparatus 20 is switched over, the meandering will occur more easily.

One of the solutions to the above-mentioned problem is to ensure the stretchability of the layered sheet 7 by loosening the compression of the layered sheet 7. As the layered sheet 7 becomes suitably stretchable in the MD-direction, although the meandering of the layered sheet 7 will restricted and it will be easier to wind the layered sheet 7 on the winding mandrel 21, a roll of sheet 1 having an excessively large winding diameter will be formed and the above-mentioned tensile strength will be further compromised.

On the contrary, according to the present embodiment, the compression step (a step of forming the layered sheet 7) is divided into the first embossing step (the first compression step) and the second embossing step (the second compression step), and the layered sheet 7 formed in the first embossing step at an earlier stage is provided with the high-compression regions 7q (the second regions) lying along the CD-direction (intersecting direction) that are intermissively disposed in the MD-direction (continuation direction). Since the high-compression region 7q becomes a starting point of bending in the steps after the first embossing step, the layered sheet 7 will be properly disposed along the peripheral surface of the dancer roller 25a and will also be properly wound on the winding mandrel 21.

Explaining in detail, the layered sheet 7 formed in the first embossing step easily folds and bends with the high-compression region 7q being the starting point of the bending. Accordingly, when disposing the layered sheet 7 along the peripheral surface of the dancer roller 25a after the first embossing step, the layered sheet 7 is folded and bent along the above-mentioned peripheral surface and folded over in a normal manner at the dancer roller 25a so as to form an appropriate loop 7a. As a result, the layered sheet 7 disposed along the peripheral surface of the dancer roller 25a can be suppressed from being meandered by being folded and bent at an improper position. The above-mentioned effect is effective when a tension acts on the layered sheet 7 disposed along the peripheral surface of the dancer roller 25a and when the above-mentioned tension varies. In other words, when the operation of the main manufacturing apparatus 20 switches over, as has been described above, the tension varies and the meandering of the layered sheet 7 is likely to occur. Even under such a condition, since the high-compression region 7q functions as a starting point of the bending, the layered sheet 7 will be properly disposed along the peripheral surface of the dancer roller 25a and the above-mentioned meandering will be effectively suppressed.

Also, when forming the layered sheet 7 compressed to the predetermined thickness in the second embossing step and winding the layered sheet 7, with the above-described behavior, the layered sheet 7 is properly bent along the peripheral surface of the winding mandrel 21 with the high-compression region 7q being the starting point of the bending. As a result, the layered sheet 7 will be properly wound on the winding mandrel 21 and will be wound up well. It is to be noted that, in the present embodiment, in order to maintain the mark of the high-compression region 7q, the second embossing step is performed in such a manner that the degree of compression of the embossed region 7x is lower than the degree of compression of the high-compression region 7q. Accordingly, the high-compression region 7q can sufficiently function as the starting point of the bending while increasing the tensile strength of the layered sheet 7 by compressing the layered sheet 7 to the predetermined thickness in the second embossing step. That is to say, the above-described drawbacks (occurrence of improper bending and dropping off of the layered sheet 7 from the winding mandrel 21) can be prevented while increasing the tensile strength.

Note that, even if the second embossing step is performed in such a manner that the degree of compression of the embossed region 7x and the degree of compression of the high-compression region 7q is substantially the same, since the time at which the high-compression region 7q is formed (i.e., first embossing step) and the time at which the embossed region 7x is formed (i.e., second embossing step) is different, the mark of the high-compression region 7q will somewhat remain. Therefore, even if the degree of compression of the embossed region 7x and the degree of compression of the high-compression region 7q is substantially the same, the high-compression region 7q will function as the starting point of the bending and a good winding of the layered sheet 7 is achieved.

Also, in the first embossing step of the present embodiment, the layered sheet 7 is formed in which the plurality of low-compression regions 7p and the plurality of high-compression regions 7q are alternately disposed in the MD-direction and also the uncompressed regions 7n that are not compressed are disposed at both end portions in the CD-direction. As has been described above, such layered sheet 7 is provided with a stretchability that enables an appropriate stretching in the MD-direction. Accordingly, when disposing the layered sheet 7 along the peripheral surface of the dancer roller 25a while applying a tension on the layered sheet 7, the meandering of the layered sheet 7 can be more effectively suppressed. Also, with the layered sheet 7 provided with an appropriate stretchability, even if the tension is applied, occurrence of the tearing and fiber drop-off can be suppressed.

Also, in the present embodiment, the uncompressed regions 7n are provided at both end portions in the CD-direction of the layered sheet 7 and the length in the CD-direction of each of the uncompressed regions 7n is less than or equal to a quarter of the length in the CD-direction of the layered sheet 7. When such a relationship between the lengths is satisfied, each of the high-compression region 7q and the uncompressed region 7n is provided on the layered sheet 7 in such a manner that a space suitable for each of the regions to function effectively is ensured. That is to say, the above-described relationship between the lengths is preferable for the high-compression region 7q to function as the starting point of the bending and the uncompressed region 7n to provide an appropriate stretchability to the layered sheet 7.

Also, in the present embodiment, the accumulating step in which the layered sheet 7 is accumulated in the motion path is performed after the first embossing step and before the second embossing step is performed. That is to say, the layered sheet 7 is disposed along the peripheral surface of the dancer roller 25a before its thickness becomes the predetermined thickness (a thickness at a winding step). Accordingly, the above-described layer separation occurs in the high-compression region 7q. With the occurrence of the layer separation, the stretchability (flexible stretchability) in the high-compression region 7q recovers temporarily. As a result, the meandering of the layered sheet 7 can be suppressed more effectively. It is to be noted that although the layer separation occurs in the high-compression region 7q, the strength against tension is sufficiently increased. Therefore, in the accumulating step (in the second accumulator 25), the layered sheet 7 can properly move in the MD-direction without being torn while the tension is being applied.

### === Other embodiments ===

In the above-mentioned various embodiments, the manufacturing method and manufacturing apparatus of the roll of sheet 1 according to the present invention have been mainly discussed. However, the above-mentioned embodiments are provided for the purpose of facilitating the understanding of the present invention only and do not give any limitation to the present invention. It goes without saying that any modifications and improvements to the present invention can be made without departing from the spirit of the invention and the present invention includes its equivalents. Further, the above-mentioned setting values, dimension values and configurations, etc., are merely examples to show effectiveness of the present invention and should not be understood as any limitation to the present invention.

Also, in the above-mentioned embodiments, the first embossing mechanism 23 is a pair of upper and lower compressing rollers 23a, 23b and on the peripheral surface of one of the compressing rollers 23a (upper), the protruded portions 23f are intermissively disposed in the circumferential direction of the one of the compression rollers 23a and the peripheral surface of the other one of the compressing rollers 23b (lower) is a flat surface. However, it is not limited thereto. For example, depressed portions (not shown) that can fit with the protruded portion 23f may be provided intermissively on the peripheral surface of the other one of the compressing roller 23b in the circumferential direction of the other one of the compression rollers 23b.

Further, in the above-mentioned embodiment, the second embossing mechanism 24 is a pair of upper and lower patterned rollers 24a, 24b and each patterned roller 24a, 24b has a peripheral surface on which a lattice pattern is formed, but it is not limited thereto. For example, the second embossing mechanism 24 may be a pair of upper and lower rollers and at least one roller of the pair of rollers may be a smooth roller having an even peripheral surface.

Further, in the above embodiment, in the first embossing step, the layered sheet 7 having a low-compression region 7p corresponding to the first region and high-compression regions 7q corresponding to the second regions that are alternately disposed in the MD-direction is formed, but it is not limited thereto. As long as the degree of compression of the second region is higher than the degree of compression of the first compression region, the layered sheet 7 in which, for example, a region that is not compressed (i.e., the uncompressed region 7n) is disposed as the above-mentioned first region may be formed.

Further, in the above embodiment, in the first embossing step, the layered sheet 7 provided with the compressed region 7m disposed at the center portion in the CD-direction and the uncompressed regions 7n disposed at both end portions in the CD-direction is formed, but it is not limited thereto. For example, in the first embossing step, the layered sheet 7 that is not provided with the uncompressed region 7n, i.e., the layered sheet 7 comprising only the compressed region 7m may be formed. Note that, as long as it is the layered sheet 7 provided with the uncompressed region 7n, since stretchability that enables an appropriate stretch in the MD-direction is given as has been described above, the meandering of the layered sheet 7 can be suppressed effectively. As for such an aspect, the above-described embodiment is preferable.

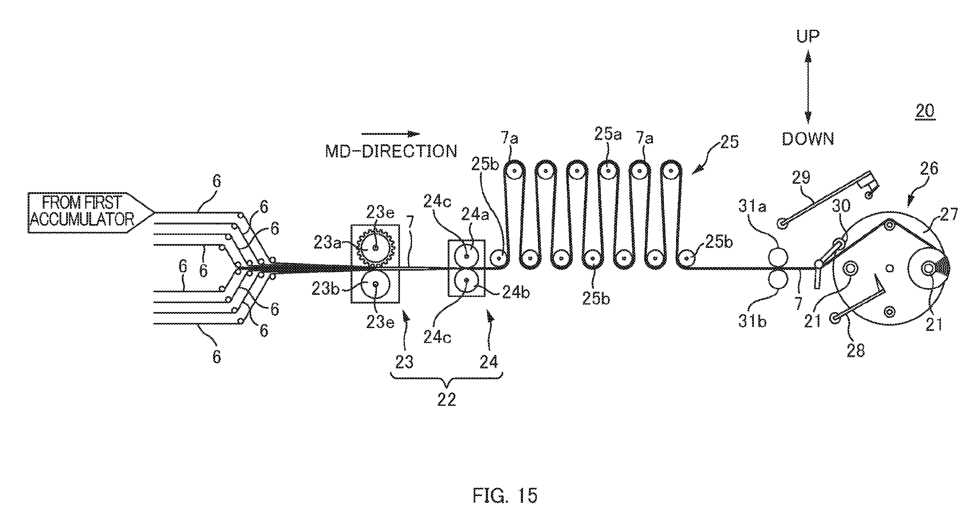

Further, in the above-mentioned embodiment, the accumulating step in which the layered sheet 7 is accumulated in the motion path is performed after the first embossing step before the second embossing step is performed, but it is not limited thereto, and the above-mentioned accumulating step may be performed after the second embossing step and before the winding step is performed. That is to say, as shown in Fig. 15, the second embossing mechanism 24 may be provided between the first embossing mechanism 23 and the second accumulator 25. Fig. 15 shows a variant of the main manufacturing apparatus 20. In the variant, a pair of nip rollers 31a, 31b is provided directly before the winding mechanism 26 and the layered sheet 7 can be prevented from flowing into the winding mechanism 26 during the replacing operation by controlling the rotation of the pair of nip rollers 31a, 31b. Explaining in detail, during the steady operation, the nip rollers 31a, 31b rotate while pinching the layered sheet 7 and moves the layered sheet 7 towards the winding mechanism 26, whereas in the replacing operation, they stop with the layered sheet 7 being pinched so as to stop a portion of the layered sheet 7 located downstream of the portion pinched between the nip rollers 31a, 31b. As a result, when switching over from the steady operation to the replacing operation, the tension exerted on the layered sheet 7 disposed along the peripheral surface of the dancer roller 25a becomes lower than the load of the weight member 25f. Thereby, the ascending/descending bar 25g ascends and each dancer roller 25a will ascends toward the top dead point.

Also in the variant shown in Fig. 15, in the accumulating step, the layered sheet 7 can be properly disposed along the peripheral surface of the dancer roller 25a while suppressing the meandering, and in the winding step, the layered sheet 7 can be wound well on the winding mandrel 21 by properly winding up. It is to be noted that, the layered sheet 7 at the stage where it is to be disposed along the peripheral surface of the dancer roller 25a has already been compressed to a predetermined thickness and thus the above-described layer separation is not likely to occur. On the other hand, in the above-described embodiment, layer separation is likely to occur and due to such layer separation, the stretchability (flexible stretchability) of the high-compression region 7q temporarily recovers and the meandering of the layered sheet 7 can be suppressed effectively. Regarding such an aspect, the above-described embodiment is preferable.

### List of Reference Numerals

1 roll of sheet, 2 piece of sheet, 3 cotton body, 4 fiber mass, 5 web, 6 fiber sheet, 7 layered sheet, 7a loop, 7m compressed region, 7n uncompressed region, 7p low-compression region, 7q high-compression region, 7x embossed region, 7y depressed portion, 7z non-depressed portion, 8 cord, 10 fiber sheet manufacturing apparatus, 11 carding machine, 11a opening, 12 gathering device, 12a guide plate, 13 pressing device, 13a pressing roller, 13b pressing roller, 14 first accumulator, 14a box, 14b conveyor, 20 main manufacturing apparatus (apparatus for manufacturing a roll of sheet), 21 winding mandrel, 22 compressing apparatus (layered sheet forming section), 23 first embossing mechanism (first compressing section), 23a compression roller, 23b compression roller, 23c major diameter portion, 23d minor diameter portion, 23e axis of rotation, 23f protruded portion, 24 second embossing mechanism (second compressing section), 24a patterned roller, 24b patterned roller, 24c axis of rotation, 24d protruded portion, 25 second accumulator (accumulating section), 25a dancer roller (rotation roller), 25b fixed roller, 25c axis of rotation, 25d supporting frame, 25e connecting belt, 25f weight member, 25g ascending/descending bar, 26 winding mechanism (winding section), 27 turn table, 27a center shaft, 27b winding mandrel shaft, 27c roller shaft, 27d guide roller, 28 cutter, 29 tape applying machine, 30 pushing roller, 30a arm, 30b swing shaft, 31a nip roller, 31b nip roller

## Claims

1. A method of manufacturing a roll of sheet, comprising:
forming a layered sheet by combining a plurality of overlapped fiber sheets by compression;
accumulating the layered sheet, that is moving in its continuation direction, in a motion path of the layered sheet; and
winding the layered sheet,
wherein the forming of the layered sheet includes:
performing first compression in which the layered sheet is compressed in such a manner that a plurality of first regions and a plurality of second regions are disposed in an alternating manner in the continuation direction, the second regions having a higher degree of compression than the first regions and lying along an intersecting direction that intersects with the continuation direction; and
performing second compression, that is performed after the first compression, in which the layered sheet is compressed in such a manner that, among the first regions and the second regions, at least the first regions are compressed,
wherein the accumulating of the layered sheet, that is performed after the first compression, includes forming a loop of the layered sheet by disposing the layered sheet along the peripheral surface of a rotatable roller, and
wherein the winding of the layered sheet, that is performed after the second compression, includes winding the layered sheet on a winding mandrel located downstream of the rotatable roller.

2. A method of manufacturing a roll of sheet according to claim 1, wherein,
in the first compression, the layered sheet is formed in which a plurality of low-compression regions corresponding to the first regions and a plurality of high-compression regions corresponding to the second regions are disposed in an alternating manner in the continuation direction, and in which uncompressed regions that are not compressed are disposed at both end portions in the intersecting direction.

3. A method of manufacturing a roll of sheet according to claim 2, wherein a length in the intersecting direction of each of the uncompressed regions disposed at the both end portions in the intersecting direction of the layered sheet is less than or equal to a quarter of a length in the intersecting direction of the layered sheet.

4. A method of manufacturing a roll of sheet according to claim 3, wherein each of the plurality of the fiber sheets is comprised of a plurality of fiber pieces, a length of the low-compression region in the continuation direction being greater than or equal to 0.3 times an average length of the plurality of fiber pieces and being less than or equal to the average length.

5. A method of manufacturing a roll of sheet according to any one of claims 1 to 4, wherein the accumulating of the layered sheet is performed after the first compression and before performing the second compression.

6. An apparatus for manufacturing a roll of sheet, comprising:
a layered sheet forming section that forms a layered sheet by combining a plurality of overlapped fiber sheets by compression;
an accumulating section that accumulates the layered sheet, that is moving in its continuation direction, in a motion path of the layered sheet; and
a winding section that winds the layered sheet,
wherein the layered sheet forming section includes:
a first compression section that compresses the layered sheet in such a manner that a plurality of first regions and a plurality of second regions are disposed in an alternating manner in the continuation direction, the second regions having a higher degree of compression than the first regions and lying along an intersecting direction that intersects with the continuation direction; and
a second compression section that is located downstream of the first compression section and that compresses the layered sheet in such a manner that, among the first regions and the second regions, at least the first regions are compressed,
wherein the accumulating section is located downstream of the first compression section and includes a rotatable roller that forms a loop of the layered sheet by disposing the layered sheet along the peripheral surface thereof, and
wherein the winding section is located downstream of the second compression section and includes a winding mandrel on which the layered sheet is wound.

7. An apparatus for manufacturing a roll of sheet according to claim 6, wherein,
the first compression section is a pair of compression rollers that rotates while pinching the plurality of fiber sheets therebetween, and
among the pair of compression rollers, on a peripheral surface of one of the compression rollers, a protruded portion that protrudes from the peripheral surface and that extends along an axis of rotation of the one of the compression rollers is disposed intermissively along a circumferential direction of the one of the compression rollers.
